(19) Europäisches Patentamt
European Patent Office
Office européen des brevets

(11) EP 0 585 954 B1

(12) **EUROPEAN PATENT SPECIFICATION**

(45) Date of publication and mention
of the grant of the patent:
**08.01.1997 Bulletin 1997/02**

(51) Int Cl.[6]: **G01C 19/72**

(21) Application number: **93114180.8**

(22) Date of filing: **03.09.1993**

(54) **Optical fiber gyroscope**

Gyroskop auf Faseroptikbasis

Gyroscope à fibre optique

(84) Designated Contracting States:
**DE FR GB IT NL SE**

(30) Priority: **04.09.1992 IT TO920733**

(43) Date of publication of application:
**09.03.1994 Bulletin 1994/10**

(73) Proprietor: **CSELT Centro Studi e Laboratori
Telecomunicazioni S.p.A.
I-10148 Turin (IT)**

(72) Inventor: **Grego, Giorgio
I-10070 Torino (IT)**

(74) Representative:
**Riederer Freiherr von Paar zu Schönau, Anton et
al
Van der Werth, Lederer & Riederer
Postfach 2664
84010 Landshut (DE)**

(56) References cited:
**GB-A- 2 078 936          GB-A- 2 119 083
US-A- 4 408 882**

## Description

The present invention relates to gyroscopes, and more particularly it concerns an electro-optical fiber gyroscope.

Electro-optical gyroscopes are substantially very high precision interferometers for measuring the small optical path difference induced in the clockwise and counterclockwise propagation direction, in a closed optical path subjected to rotation (Sagnac effect). As a consequence of this difference in the optical path, two light waves travelling in opposite directions accumulate a relative phase shift $\varphi_s$ (Sagnac phase shift) linked to the angular speed $\Omega$ by the relation

$$\varphi_s = 8\pi \ A\Omega/\lambda \cdot c$$

where A is the area enclosed by the path, $\lambda$ the wavelength and c the wave propagation speed. Phase shift is measured at the output of a photodetector creating the beat between the two waves.

Electro-optical gyroscopes can be substantially divided into two categories: active interferometer gyroscopes (e.g. loop laser gyroscope), where the two light radiations made to interfere are generated within the closed path (hereafter simply called "loop") by an active medium contained in it, and passive interferometer gyroscopes (e.g. optical fiber gyroscope), where the radiation source is outside the loop and is independent from it.

More particularly, a loop laser gyroscope can be schematized as a cavity delimited by mirrors (e.g. three) and the laser constituting the source (typically a He-Ne laser) is placed between two of the mirrors. Difference $\Delta p$ of the optical path run by the two waves in case of rotation is given by

$$\Delta p = \varphi_s \lambda/2\pi$$

and the two waves oscillate with a relative frequency difference $\Delta\nu/\nu = \Delta p/p$. The beat signal obtained by recombination on the photodetector is a signal of the type

$$I = I_0(1 + \cos 2 \ \pi\Delta\nu t) = I_0[1 + \cos\varphi_s \ (c/p)t]$$

In case of an optical fiber gyroscope, the source sends the signal to both ends of an optical fiber length by means of a beam splitter, collecting, recombining and sending to the detector the waves outgoing from the length. Its output signal is of the type

$$I' = I'_0 \ (1 - \cos\varphi_s)$$

Independently from the practical realization of the two types of gyroscope, the measurement of the Sagnac phase shift, and therefore of the angular speed, requires a measurement of the frequency of the signal detected in the case of a laser gyroscope, and a phase measurement in the fiber gyroscope.

It is well-known now that measurement of the frequency of an electric signal can be performed with a much greater precision and easiness than a phase measurement, and actually laser gyroscopes have a sensitivity about 100 times that of fiber gyroscopes (0,001 - 0,01 °/hour against 0,1 - 1°/hour) . A laser gyroscope (or in general an active gyroscope) however is far more critical and far more expensive to manufacture than a fiber gyroscope (passive gyroscope).

The aim of the invention is to provide a gyroscope of this second type where the angular speed measurement can be derived from a frequency measurement, in order to obtain the advantages of measurement facility and precision, together with manufacturing simplicity.

According to the invention, the gyroscope consists of a light source sending to both ends of a fiber length, defining a closed path, light signals which travel at the same time along the length in the two directions and which are collected by a device able to create an electric signal representing the beat between said light signals, and is characterized in that the source is associated to means for frequency modulating said light signals periodically and continuously before they are sent to the fiber, and the device creating the beat signal is associated to means for measuring the frequency of the beat signal and obtain from it the rotation speed of a body to which the gyroscope is associated.

The invention will be better understood with reference to the annexed drawings, wherein:

- Fig. 1 is a schematic view of an optical fiber gyroscope according to the invention; and
- Fig. 2 shows the output waves of the gyroscope while stationary (Fig. 2a) and rotating (Fig. 2b).

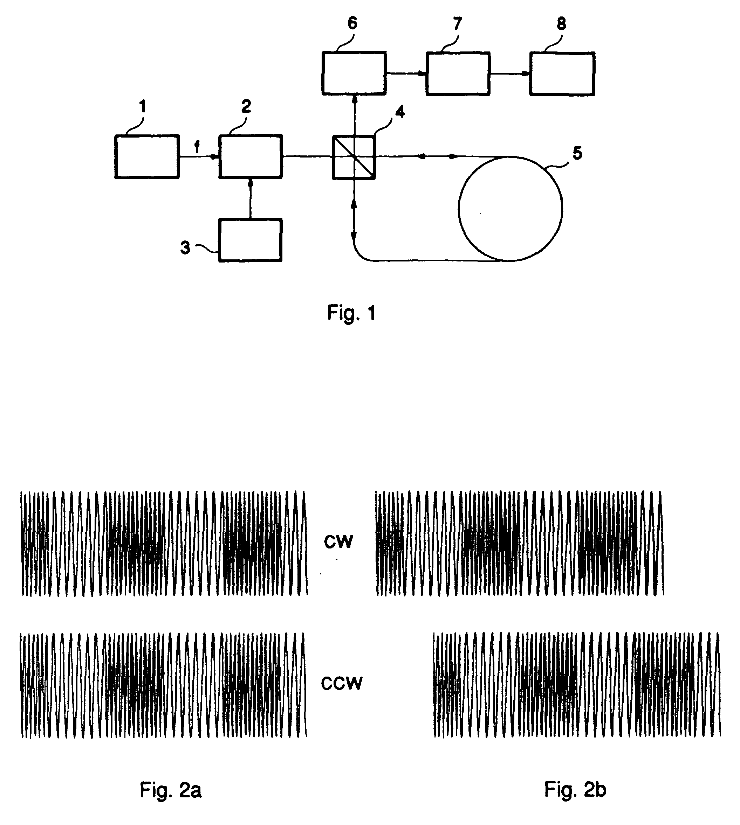

In Fig. 1, the radiation emitted by a substantially monochromatic source 1 (in particular a semiconductor laser) is frequency modulated in a modulator 2 by a radio-frequency signal emitted by a generator 3, so as to vary periodically and with continuity between two limits $f + \Delta f$, $f - \Delta f$. To be remarked that even if a modulator 2 external to the source is indicated in the Figure, in the case of semiconductor laser, generator 3 can directly modulate the feed current of laser 1.

The frequency modulated signal is sent to a beam splitter 4 sharing in equal parts the power associated to the signal between both ends of an optical fiber length 5, looped on the two output faces of splitter 4. The two beam parts sent to the fiber propagate in opposite directions inside the loop. The beam splitter 4 collects also the radiations outgoing from both fiber ends and causes their recombination on a photodetector 6, which emits an electric signal representing the beat between radiations outgoing from both fiber ends.

A counter 7 or other device for measuring frequency provides the value of Δf and a computing unit 8 obtains from Δf, knowing the modulation law, the value of $\varphi_s$ (or more precisely the difference of the optical path between the two waves) and then angular speed Ω of the body on which the gyroscope is mounted.

Figures 2a and 2b show clearly the operation of the present invention. The Figures refer to the case in which the signal emitted by the laser is modulated by a triangular wave, so that the frequency varies in a linear way. When the body on which the gyroscope is mounted does not undergo a rotation, the two waves travelling clockwise (CW wave) or counterclockwise (CCW wave), along the fiber run the same optical path and then arrive at the same instant at the two faces of the detector (Fig. 2a): there is therefore no frequency difference between the two waves and the detector output signal will be a d.c. signal. If however the body undergoes rotation, the two waves arrive at the two faces at different instants, and they will therefore have different frequencies (Fig. 2b). Then a beat at frequency If(cw) - f(ccw)I [where f(cw) and f(ccw) are the frequencies of clockwise and counterclockwise propagating waves, respectively, at the recombining instant] will be created: the frequency difference is obviously linked to the phase shift in a manner depending on the adopted modulation law.

In the case of the modulation shown in Fig. 2, it can be supposed that the laser is modulated so as to obtain a frequency variation Δf of approximately 10 GHz with modulating frequency of 1 GHz. These vales are quite typical for direct modulation of a semiconductor laser. In a period of the modulating wave at 1 GHz the light radiation propagating in the fiber runs approximately 20 cm of the fiber and in these 20 cm its frequency varies by 10 GHz. Since a linear modulation law has been assumed, this corresponds to a frequency difference of 1 Hz every 20 pm approximately of difference in the optical path between two waves: for a typical fiber gyroscope, where the loop is obtained with approximately 200 m of fiber wound on a 10 cm diameter, this corresponds to an angular speed of a few tenths of a degree per hour. If the measurement frequency is selected conveniently, the desired sensitivity is obtained: on the other hand no problem arises, with a simple electronic counter, to measure some tenths or hundredths of Hz, considering that it is possible to carry out a time integration of the counts.

It is clear that what described has been given only by way of a non limiting example, and that variations and modifications are possible without going out of the scope of the invention.

## Claims

1. An optical fiber gyroscope, where a light source (1) sends light signals to the two ends of a fiber length (5) defining a closed path, which signals travel simultaneously along the fiber (5) in both directions and are collected by a device (6) creating an electric signal representing the beat between said light signals, and the source (1) is associated to means (2, 3) for periodically and continuously frequency modulating said light signals before they are sent to the fiber (5), characterized in that the device (6) creating the beat signal is associated to means (7, 8) for measuring the frequency of said beat signal and for obtaining from it the rotation speed of a body to which the gyroscope is associated.

## Patentansprüche

1. Gyroskop auf Faseroptikbasis, bei dem eine Lichtquelle (1) Lichtsignale zu den beiden Enden eines Faserabschnitts (5), der einen geschlossenen Pfad bildet, sendet und diese Signale gleichzeitig in beiden Richtungen entlang der Faser (5) laufen und von einer Vorrichtung (6) aufgefangen werden, die ein elektrisches Signal erzeugt, das die Schwebung zwischen den Lichtsignalen wiedergibt, und der Quelle (1) eine Einrichtung (2, 3) zur periodischen und stetigen Frequenzmodulation der Lichtsignale, bevor diese zur Faser (5) gesendet werden, zugeordnet ist, dadurch gekennzeichnet, daß der das Schwebungssignal erzeugenden Einrichtung (6) eine Einrichtung (7, 8) zum Messen der Frequenz des Schwebungssignals und zum hieraus Ermitteln der Drehgeschwindigkeit eines Körpers, mit dem das Gyroskop verbunden ist, zugeordnet ist.

## Revendications

1. Gyroscope à fibre optique, dans lequel une source de lumière (1) envoie aux deux extrémités d'un tronçon de fibre (5) définissant un parcours fermé des signaux lumineux qui se déplacent le long de la fibre (5) dans les deux sens aux même temps et qui sont recueillis par un dispositif (6) qui engendre un signal électrique représentatif du battement entre ces signaux lumineux, et la source (1) est associée à des moyens (2, 3) pour moduler en fréquence périodiquement et de façon continue ces signaux lumineux avant leur envoi dans la fibre (5), caractérisé en ce que le dispositif (6) qui engendre le signal de battement est associé à des moyens (7, 8) pour mesurer la fréquence du signal de battement et obtenir de celle-ci la vitesse de rotation d'un corps auquel le gyroscope est associé.

Fig. 1

CW

CCW

Fig. 2a

Fig. 2b